(19) **Europäisches Patentamt / European Patent Office / Office européen des brevets**

(11) **EP 2 190 786 B1**

(12) # EUROPÄISCHE PATENTSCHRIFT

(45) Veröffentlichungstag und Bekanntmachung des Hinweises auf die Patenterteilung:
**13.09.2017 Patentblatt 2017/37**

(21) Anmeldenummer: **08775316.6**

(22) Anmeldetag: **23.07.2008**

(51) Int Cl.:
*C01G 53/00* (2006.01)    *C01G 53/04* (2006.01)
*C01G 51/00* (2006.01)    *H01M 4/525* (2010.01)

(86) Internationale Anmeldenummer:
**PCT/EP2008/059649**

(87) Internationale Veröffentlichungsnummer:
**WO 2009/024424 (26.02.2009 Gazette 2009/09)**

(54) **PULVERFÖRMIGE NI(A)M1(B)M2(C)O(X)OH(Y) VERBINDUNGEN, VERFAHREN ZU DEREN HERSTELLUNG SOWIE DEREN VERWENDUNG IN BATTERIEN**

POWDERED COMPOUNDS, METHOD FOR THE PRODUCTION THEREOF, AND USE THEREOF IN LITHIUM SECONDARY BATTERIES

COMPOSÉS PULVÉRULENTS. PROCÉDÉ POUR LES PRODUIRE ET LEUR UTILISATION DANS DES BATTERIES SECONDAIRES AU LITHIUM

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **21.08.2007 DE 102007039471**

(43) Veröffentlichungstag der Anmeldung:
**02.06.2010 Patentblatt 2010/22**

(73) Patentinhaber: **H.C. Starck GmbH**
**38642 Goslar (DE)**

(72) Erfinder:
  • **JAHN, Matthias**
    **38642 Goslar (DE)**
  • **MAIKOWSKE, Gerd**
    **38642 Goslar (DE)**
  • **MALCUS, Stefan**
    **38642 Goslar (DE)**
  • **MEESE-MARKTSCHEFFEL, Juliane**
    **38642 Goslar (DE)**
  • **OLBRICH, Armin**
    **38723 Seesen (DE)**
  • **ZERTANI, Rüdiger**
    **38642 Goslar (DE)**

(56) Entgegenhaltungen:
  WO-A-2004/032260    WO-A-2007/019986
  WO-A-2007/113102    US-A- 5 498 403

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft pulverförmige Verbindungen der Formel $Ni_aM1_bM2_cO_x(OH)_y$, ein Verfahren zur deren Herstellung, sowie deren Verwendung als Vorstoff für die Herstellung von Lithiumverbindungen für den Einsatz in Lithium-Sekundärbatterien.

JP10027611 A offenbart die Synthese eines kogefällten Mischhydroxides, welches zumindest die beiden Metalle Nickel und Cobalt beinhaltet, aber nicht auf diese beschränkt ist. Das kogefällte Mischhydroxid wird zu Lithiummischmetalloxiden als Aktivmasse für Lithium-Sekundärbatterien weiterverarbeitet. Durch die Kofällung der Elemente auf der Stufe des Vorstoffes kann ein Lithiummischmetalloxid gefertigt werden, welches eingesetzt in Lithium-Sekundärbatterien zu einer Verbesserung des elektrochemischen Zyklenverhaltens führt. Der molare Nickelanteil in den Lithiummischmetalloxiden, bezogen auf die metallischen Elemente mit Ausnahme des Lithiums, beläuft sich dabei auf mindestens 70%.

JP 11-317224 A beschreibt die Synthese von Mangan- und Kobalt- dotierten Nickelhydroxiden mittels einer Kofällung. Die Synthese erfolgt unter reduzierenden bzw. inerten Bedingungen, um eine Oxidation der zweiwertigen Metalle zu vermeiden. Das Material zeichnet sich durch hohe Klopfdichten (> 1,7 $g/cm^3$) aus und wird als Aktivmasse für Alkali-Sekundärbatterien verwendet.

In US 2002/0053663 A1 wird ein kogefälltes Nickel-Cobalt-Mangan-Hydroxid beansprucht, welches eine Klopfdichte von mindestens 1,5 $g/cm^3$ aufweist. Das kogefällte Mischhydroxid dient als Vorstoff zur Synthese von Lithium-Nickel-Cobalt-Mangan-Oxiden (LNCMO). Mit in dem Patent als 'konventionell' beschriebenen Prozessen lassen sich keine Mischhydroxide hoher Klopfdichte herstellen. Die hohe Klopfdichte des Mischhydroxides ist von so grosser Bedeutung, da sie einen positiven Effekt auf die Klopfdichte des Endproduktes hat, welche wiederum Einfluss auf die volumetrische Energiedichte in einer Lithium-Sekundärbatterie nimmt. In den Beispielen werden Pulver offenbart, deren Klopfdichten Werte zwischen 1,71 und 1,91 $g/cm^3$ aufweisen. Die mittlere Teilchengröße der Pulver beträgt dabei 5-20 $\mu m$. Mischhydroxide mit hoher Klopfdichte konnten in US 2002/0053663 A1 erzielt werden, indem die Fällung entweder unter inerten oder sogar unter reduzierenden Bedingungen durchgeführt wurde.

US 2003/0054251 A1 beschreibt einen optimierten Verfahrensweg zur Synthese Nickel- und manganhaltiger Mischoxide bzw. Mischhydroxide als Vorstoffe für die kathodische Aktivmasse in Lithium-Sekundärbatterien. Der Hauptgedanke dieser Erfindung ist, die bereits in der Literatur erwähnten, kogefällten Mischhydroxide (z.B. der Metalle Ni, Co, Mn) vor dem eigentlichen Ofenprozess thermisch bei 300 - 500°C vorzubehandeln, um einen sogenannten 'dry precursor' zu erhalten. Dieser 'dry precursor' wird dann mit einer Lithium-Komponente versetzt und durch eine Glühung zum LNCMO umgesetzt. Wird der beschriebene, getrocknete Vorstoff anstelle eines (ungetrockneten) Mischhydroxides eingesetzt, so wird gemäss dieser Schrift ein Endprodukt erhalten, welches sich durch eine höhere Produktkonstanz auszeichnet als Materialien, bei denen das ungetrocknete Mischhydroxid zum Einsatz kam. Die Produktkonstanz der Materialien wurde bestimmt, indem mit jedem Material jeweils zwanzig Batterien gefertigt wurden, und für diese zwanzig Batterien die Variation der Kapazitätsabnahme zwischen dem dritten und dreihundertsten elektrochemischen Zyklus evaluiert wurde.

WO 2004/092073 A1 befasst sich ebenfalls mit Mischmetall-Vorstoffen für LNCMO-Materialien. Wie in US 2003/0054251, wird hier nach einem idealen Vorstoff für die Synthese von LNCMO's gesucht. US 2003/0054251 wird darin unter anderem als Stand der Technik angeführt. Da die thermische Behandlung des Vorstoffes, wie in US 2003/0054251 beschrieben, sehr aufwendig ist, wird alternativ eine Oxidation des kogefällten Ni-Co-Mn-Hydroxides zu einem Ni/Co/Mn-Oxyhydroxid vorgeschlagen.

WO 2004/032260 beschreibt ein aktives Nickelmischhydroxid-Kathodenmaterial, das für die Verwendung in alkalischen Akkumulatoren vorgesehen ist und das eine spezielle bimodale Korngrößenverteilung besitzt. Die Herstellung des Nickelmischhydroxids erfolgt in einem kontinuierlichen Fällungsprozess in einem Schlaufenreaktor, der über eine integrierte Klärzone verfügt.

WO 2007/113102 betrifft eine Vorrichtung und ein Verfahren zur Herstellung von Verbindungen durch Fällung von Feststoffen aus Lösungen, wobei die physikalischen und chemischen Eigenschaften der sich bei der Fällung bildenden Partikel des Feststoffs sehr flexibel und unabhängig voneinander eingestellt werden können und somit Produkte mit sehr hoher Raum-Zeit-Ausbeute hergestellt werden, sowie in pulverförmiges Nickel-Cobalt-Mischhydroxid der allgemeinen Formel $Ni_xCo_{1-x}(OH)_2$, mit einer BET-Oberfläche von weniger als 20 $m^2/g$ und einer Klopfdichte von größer als 2,4 $g/cm^3$.

WO 2007/019986 offenbart partiell oxidierte Nickel-Mischmetallhydroxide (NCMO), ein Verfahren zu deren Herstellung, sowie deren Verwendung als Vorstoff zur Herstellung von Kathodenmaterial für Lithium-Sekundärbatterien. Die Nickelmischmetallhydroxide zeichnen sich dadurch aus, dass sie eine Klopfdichte von größer 1,7 $g/cm^3$, bevorzugt von größer 1,9 $g/cm^3$ und eine mittlere Korngröße der Sekundärpartikel von 2 bis 30 $\mu m$ aufweisen. Die normierte Breite der Korngrößenverteilung beträgt kleiner 1,8.

Die NCMO werden dabei durch Fällung aus Metallsalzen mit Laugen und anschließender partieller Oxidation in einem weiteren Reaktor hergestellt. Hierdurch soll eine hohe Klopfdichte des partiell oxidierten NCMO erreicht werden.

Die nach dem zitierten Stand der Technik hergestellten Nickel-Mischmetallhydroxide werden als Ausgangsmaterialien zur Herstellung von Lithium-Sekundärbatterien eingesetzt. Derartige Sekundärbatterien eignen sich nur bedingt für den Einsatz in Hybrid- und Elektrofahrzeugen.

Für beide Typen von Fahrzeugen ist eine schnelle Entladung und Ladung der Batterien erforderlich, um hohe Beschleunigungen erzielen zu können und beim Abbremsen des Fahrzeuges dessen kinetische Energie mit möglichst geringen Wärmeverlusten in elektrische Energie zurückzuverwandeln. Bei feststehender Energie für einen bestimmten Beschleunigungs- oder Bremsvorgang ist die benötigte Entlade/Lade-Rate, ausgedrückt in $\pm \Delta$ Gesamtkapazität/$\Delta$ t, umso ge-ringer, je höher die Gesamtkapazität der Batterie ist. Es wird also nicht nur aus Platz- und Kostengründen, sondern auch aus elektrischen Gründen angestrebt, eine möglichst hohe Volumenkapazität der Batterie zu haben. Beim reinen Elektrofahrzeug ist dieses darüber hinaus schon deshalb zwingend notwendig, weil die Kapazität naturgemäß den Aktionsradius bestimmt und dieser absolut entscheidend für die Marktfähigkeit dieser Fahrzeuge ist.

Aufgabe der vorliegenden Erfindung ist somit die Bereitstellung eines Ausgangsmaterials zur Herstellung von Lithiummischmetallaten für den Einsatz in Lithium-Sekundärbatterien, die eine wesentlich höhere Volumenkapazität und hohe elektrische Leistung aufweisen. Eine weitere Aufgabe bestand darin, für den sehr stark an Bedeutung gewinnenden Sektor der Hybridfahrzeuge und Elektrofahrzeuge (Electric Vehicles, EVs, Hybrid-PKW, -LKW, - Lokomotiven, - Fahrräder) Materialien bereitzustellen, die es erlauben Batterien zu bauen, welche diesen Fahrzeugen trotz hoher Beschleunigungswerte große Reichweiten ermöglichen. Die Aufgabe der vorliegenden Erfindung ist auch ein Verfahren zur Herstellung von Ausgangsmaterialien für die Herstellung von Lithiummischmetallaten zur Verfügung zu stellen.

Die Aufgabe wird gelöst durch eine pulverförmige Verbindung der Formel $Ni_aM1_bM2_cO_x(OH)_y$, (später auch NM1M2OOH, Nickelmischmetallhydroxid oder Nickelmischmetalloxyhydroxid genannt), wobei M1 mindestens ein Element ausgewählt aus der Gruppe bestehend aus Fe, Co, Zn, Cu und/oder deren Mischungen, M2 mindestens ein Element ausgewählt aus der Gruppe Mn, Al, Cr, B, Mg, Ca, Sr, Ba, Si und/oder deren Mischungen bedeuten, $0.3 \leq a$ $\leq 0.83$, $0.1 \leq b \leq 0.5$, $0.01 \leq c \leq 0.5$, $0.01 \leq x \leq 0.99$ und $1.01 \leq y \leq 1.99$ sind, welches dadurch gekennzeichnet ist, dass das Verhältnis von Klopfdichte, gemessen nach ASTM B 527 zu D50-Wert der Teilchengrößenverteilung, gemessen nach ASTM B 822 mindestens $0.2 \, g/cm^3 \cdot \mu m$ beträgt und wobei die pulverförmige Verbindung eine BET-Oberfläche gemessen nach ASTM D 3663 kleiner $9 m^2/g$ aufweist.

Vorteilhafte pulverförmige Verbindungen sind Nickelmischmetallhydroxide, wobei $0.1 \leq x \leq 0.8$, besonders bevorzugt $0.2 \leq x \leq 0.7$ ist.

Pulverförmige Verbindungen, welche Teil der Erfindung sind, werden in der folgenden Tabelle 1 aufgeführt.

Tabelle 1

| Verbindung Nr. | a | M1 | b | M2 | c | x | y |
|---|---|---|---|---|---|---|---|
| 001 | 0.333 | Co | 0.333 | Mn | 0.333 | 0.80 | 1.20 |
| 002 | 0.333 | Co | 0.333 | Mn | 0.333 | 0.50 | 1.50 |
| 003 | 0.333 | Co | 0.333 | Mn | 0.333 | 0.05 | 1.95 |
| 004 | 0.50 | Co | 0.20 | Mn | 0.30 | 0.30 | 1.70 |
| 005 | 0.50 | Co | 0.20 | Mn | 0.30 | 0.45 | 1.55 |
| 006 | 0.40 | Co | 0.20 | Mn | 0.40 | 0.62 | 1.38 |
| 007 | 0.45 | Co | 0.10 | Mn | 0.45 | 0.47 | 1.53 |
| 008 | 0.333 | Co | 0.333 | Mn | 0.333 | 0.80 | 1.18 |
| 009 | 0.80 | Co | 0.10 | Mn | 0.10 | 0.11 | 1.89 |
| 010 | 0.80 | Co | 0.10 | Mn | 0.10 | 0.03 | 1.97 |
| 011 | 0.80 | Co | 0.10 | Mn | 0.10 | 0.05 | 1.92 |
| 012 | 0.80 | Co | 0.15 | Mg | 0.05 | 0.02 | 1.98 |
| 013 | 0.82 | Co | 0.15 | Mg | 0.03 | 0.03 | 1.97 |
| 014 | 0.78 | Co | 0.15 | Cr | 0.07 | 0.13 | 1.87 |
| 015 | 0.75 | Co | 0.20 | Ca | 0.05 | 0.06 | 1.94 |
| 016 | 0.72 | Co | 0.25 | Cr | 0.03 | 0.13 | 1.87 |
| 017 | 0.65 | Co | 0.30 | Sr | 0.05 | 0.17 | 1.83 |

(fortgesetzt)

| Verbindung Nr. | a | M1 | b | M2 | c | x | y |
|---|---|---|---|---|---|---|---|
| 018 | 0.82 | Fe | 0.15 | Cr | 0.03 | 0.24 | 1.76 |
| 019 | 0.68 | Fe | 0.20 | Ca | 0.12 | 0.11 | 1.89 |
| 020 | 0.76 | Zn | 0.11 | Cr | 0.13 | 0.14 | 1.86 |

Die pulverförmigen Verbindungen gemäß der Erfindung weisen bevorzugt ein Verhältnis von Klopfdichte zu D50-Wert der Teilchengrößenverteilung von mindestens 0.25 g/cm$^3$ ·μm, bevorzugt von mindestens 0.3 g/cm$^3$ ·μm, besonders bevorzugt von mindestens 0.4 g/cm$^3$ ·μm und insbesondere bevorzugt von mindestens 0.5 g/cm$^3$ ·μm auf.

Die pulverförmigen Nickelmischmetallhydroxide gemäß der Erfindung zeichnen sich durch ihre niedrigen D50-Werte, die kleiner 10 μm, bevorzugt kleiner 9 μm sind, aus.

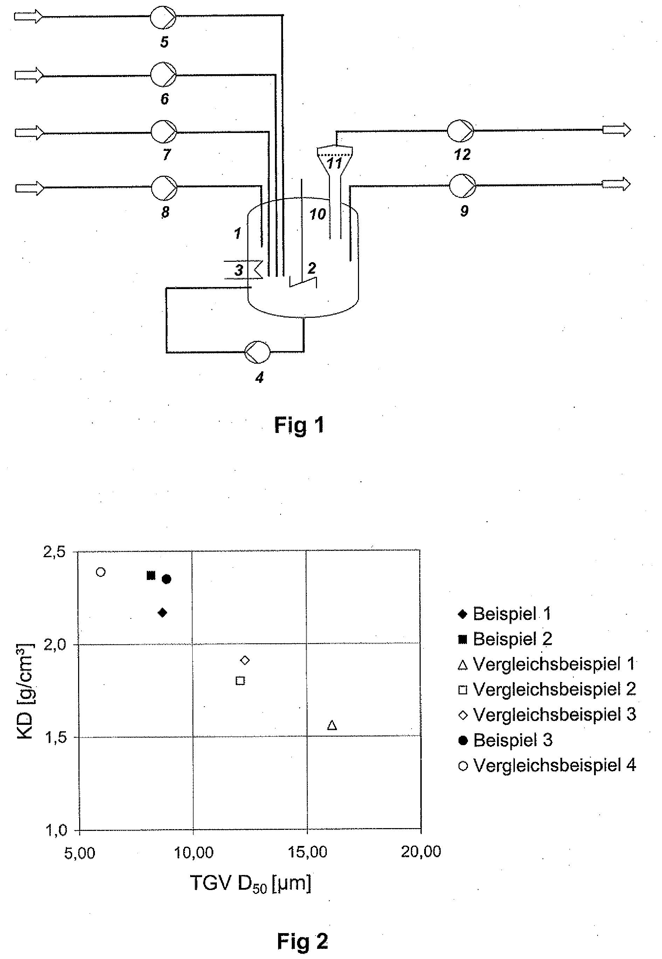

Überraschenderweise und im Gegensatz zum Stand der Technik wurde gefunden, dass die Klopfdichte der erfindungsgemäßen pulverförmigen Verbindungen trotz niedriger D50-Werte sehr hohe Werte erreicht, Figur 2. Naturgemäß fällt die Klopfdichte mit sinkenden D50-Wert der Pulver monoton ab.

Die Klopfdichte der pulverförmigen Verbindungen gemäß der Erfindung, gemessen nach ASTM B 527, beträgt $\geq$ 2.0 g/cm$^3$, bevorzugt $\geq$ 2.1 g/cm$^3$, besonders bevorzugt $\geq$ 2.2 g/cm$^3$ und insbesondere bevorzugt $\geq$ 2.3 g/cm$^3$. Besonders bevorzugte pulverförmige Verbindungen zeichnen sich durch eine noch höhere Klopfdichte von $\geq$ 2.4 g/cm$^3$ aus.

Von besonderer Bedeutung sind hier die manganhaltigen Nickelmischmetallhydroxide. Die manganhaltigen Nickelmisch-hydroxide mit Klopfdichten von $\geq$ 2.0 g/cm$^3$, stellen eine völlig neue Stoffkategorie dar. Selbst bei den manganhaltigen Pulvern mit wesentlich höheren D50-Werten, werden kleinere Klopfdichten erzielt, wie dem Stand der Technik und Vergleichsbeispiel 1 in Tabelle 1 entnommen werden kann.

Die pulverförmigen Verbindungen gemäß der Erfindung zeichnen sich besonders durch ihre BET-Oberfläche aus. Die Mischmetallhydroxide gemäß der Erfindung weisen BET-Oberflächen, gemessen nach ASTM D 3663, von kleiner 9 m$^2$/g, bevorzugt von kleiner 8 m$^2$/g, besonders bevorzugt von kleiner 7 m$^2$/g auf.

Die Mischmetallhydroxide gemäß der Erfindung zeichnen sich besonders durch eine normierte Breite der Korngrößenverteilung, definiert nach der Formel

$$\frac{D90-D10}{D50} \qquad (1)$$

worin D Durchmesser der Pulverpartikel bedeutet, von $\leq$ 1.3, bevorzugt $\leq$ 1.2, besonders bevorzugt $\leq$ 1.0 aus.

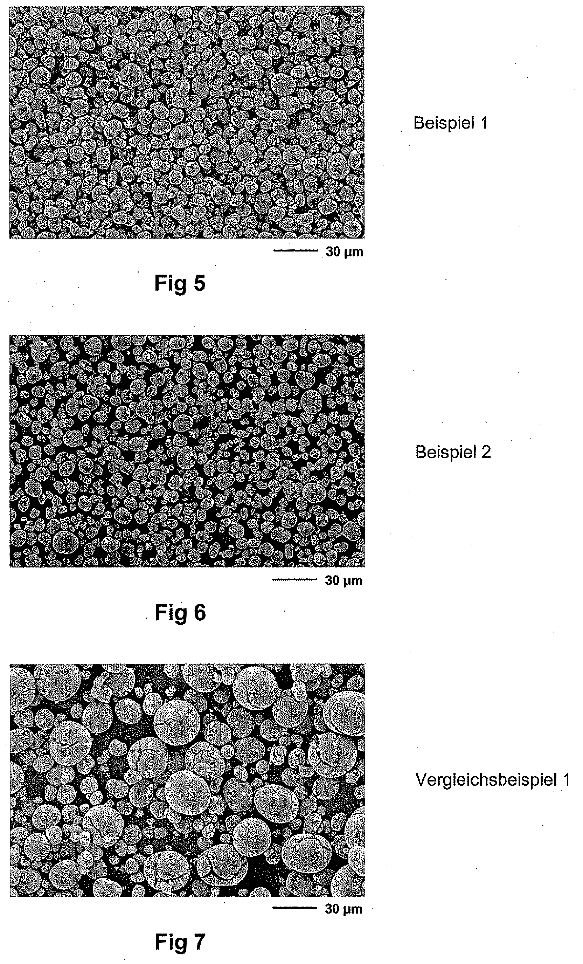

Die bevorzugten pulverförmigen Verbindungen gemäß der Erfindung zeichnen sich durch die sphäroidische Form der Partikel aus, deren Formfaktor einen Wert von $\geq$ 0.8, bevorzugt von $\geq$ 0.9, besonders bevorzugt von $\geq$ 0.95 aufweist. Der Formfaktor der Partikel kann nach der in US 5476530, Spalten 7 und 8 und Fig.5 genannten Methode bestimmt werden. Diese Methode ermittelt einen Formfaktor der Partikel, welcher ein Maß für die Sphärizität der Partikel ist. Der Formfaktor der Partikel kann auch aus den REM-Aufnahmen der Materialien bestimmt werden. Der Formfaktor wird durch die Evaluierung des Partikelumfangs sowie der Partikelfläche und der Bestimmung des aus der jeweiligen Größe abgeleiteten Durchmessers bestimmt. Die genannten Durchmesser ergeben sich aus

$$d_U = U / \pi \qquad\qquad d_A = \left(4A/\pi\right)^{\frac{1}{2}}.$$

Der Formfaktor der Partikel f leitet sich ab aus dem Partikelumfang U und der Partikelfläche A gemäß:

$$f = \left(\frac{d_A}{d_U}\right)^2 = \left(\frac{4\pi A}{U^2}\right)$$

Im Falle eines idealen sphärischen Partikels sind $d_A$ und $d_U$ gleich groß und es würde sich ein Formfaktor von genau eins ergeben.

Die Figuren 5 und 6 zeigen beispielhaft mit einem Rasterelektronenmikroskop (REM) aufgenommenen Abbildungen der Nickelmischmetallhydroxide, die gemäß den Beispielen 1 und 2 hergestellt wurden.

Die Formfaktoren der erfindungsgemäßen pulverförmigen Verbindungen sind mit Werten von $\geq$ 0.8 bemerkenswert

hoch, angesichts der Tatsache, dass die Materialien Teilchengrößenverteilungen mit D50-Werten von < 10 μm aufweisen.

Aus Tabelle1 und den Figuren 5 und 6 kann man die relativ enge Teilchengrößenverteilung der erfindungsgemäßen Nickelmischmetallhydroxide ersehen, die mit Werten von <1,2 für die durch $\dfrac{D90-D10}{D50}$ definierte normierte Teilchengrößenverteilung deutlich geringer ist als bisher bekannt. Es ist seit langem bekannt, dass bei der Herstellung sphärischer Nickelhydroxide oder -Oxihydroxide für den Einsatz in Nickelmetallhydridbatterien oder zur Verwendung als Vorstoff für die kathodischen Aktivmassen von Lithiumionenbatterien, praktisch unabhängig von den Anlagenparametern und ihrer Variation innerhalb der üblichen Bereiche, die normierte Breite der Teilchengrößenverteilung Werte zwischen 1.4 und maximal 1.6 annimmt. Die erreichten Klopfdichten liegen bei maximal 60% der physikalischen Dichte der Materialien. Dieser Wert liegt deutlich unter der theoretischen Packungsdichte von 74% für Kugeln einheitlicher Größe. Man kann vermuten, dass sich mit normierten Teilchengrößenverteilungen, deren Wert signifikant, mindestens 20%, von 1.5 abweicht, eventuell höhere Packungsdichten und damit auch Klopfdichten erreichen lassen, die größer sind als 60% der physikalischen Dichte.

Die Erfindung betrifft weiterhin ein neues Verfahren zur Herstellung pulverförmiger Verbindungen bestehend, aus folgenden Schritten:

a) Bereitstellen von mindestens einer ersten und einer zweiten Eduktlösung,

b) Zusammenführen von mindestens der ersten und der zweiten Eduktlösung in einem Reaktor und Erzeugung einer homogen durchmischten Reaktionszone mit einem spezifischen mechanischen Leistungseintrag von mindestens 2 Watt/Liter und Erzeugung einer Produktsuspension, bestehend aus unlöslichem Produkt und einer, durch Einstellung eines Laugenüberschusses übersättigten Mutterlauge, mit einem pH-Wert von 10-12.

c) Partielle Abtrennung der Mutterlauge vom ausgefällten Produkt zur Einstellung von Feststoffgehalten von mindestens 150 g/Liter in der Suspension durch Klär- und/oder Filterelemente,

d) Entnahme der Produktsuspension aus dem Reaktor.

Bevorzugt wird das erfindungsgemäße Verfahren bei einem spezifischen Leistungseintrag von mindestens 3 W/l, besonders bevorzugt mindestens 4 W/l durchgeführt.

Nach dem Verfahren gemäß der Erfindung können Nickelmischmetallhydroxide aus der Gruppe der Metalle wie Fe, Co, Zn, Cu, Mn, Al, Cr, B, Mg, Ca, Sr, Ba, Si hergestellt werden. Ausgegangen wird dabei von Eduktlösungen aus wasserlöslichen Salzen von Mineralsäuren, z.B. Schwefelsäure, Salzsäure oder Salpetersäure der vorbenannten Metalle und/oder deren Mischungen.

Die Eduktlösungen können hergestellt werden, indem die betreffenden Metallchloride, Metallsulfate oder Metallnitrate in Wasser aufgelöst oder die Metalle in den entsprechenden Mineralsäuren gelöst werden. Die Alkalilaugen werden in der gewünschten Konzentration als wässrige Lösung bereitgestellt.

Das Verfahren eignet sich bevorzugt zur Herstellung von Nickelmischmetallhydroxiden gemäß der Erfindung. Als Vorstoffe können wasserlösliche Metallsalze, z.B. Nickelsulfat, Nickelnitrat, Nickelhalogenide, wie z.B. Chloride und/oder deren Mischungen eingesetzt werden.

Die Nickelmischmetallhydroxide können sowohl in sphäroidischer als auch in nichtsphäroidischer Teilchenform hergestellt werden, wobei die Herstellung der sphäroidischen Teilchen in Gegenwart von Ammoniak oder Ammoniumsalzen durchgeführt wird.

Die Herstellung der Nickelhydroxide gemäß der Erfindung wird bevorzugt in einem in Figur 1 dargestellten Reaktor (1) durch Fällungskristallisation aus wässrigen Nickelsalzlösungen bei einem pH-Wert von 10-12, bevorzugt von 11-12, durch die Zufuhr von Alkalihydroxydlösungen und gegebenenfalls Ammoniak, gasförmig oder als wässrige Lösung, durchgeführt. Als Alkalihydroxidlösungen werden bevorzugt Natriumhydroxid, sowie Kaliumhydroxid eingesetzt. Obwohl die Fällungskristallisation batchweise oder semikontinuierlich erfolgen kann, wird diese vorzugsweise kontinuierlich durchgeführt. Bei dem kontinuierlichen Verfahren erfolgt die gleichzeitige Zufuhr von Metallsalzlösung, Alkalihydroxidlösung und Ammoniaklösung zum Reaktor und ein kontinuierlicher Abzug der Produktsuspension über einen freien Überlauf oder eine Pumpe.

Bevorzugte pulverförmigen Verbindungen, die sehr fein sind und besonders hohe Klopfdichten aufweisen, werden erhalten, wenn die Feststoffkonzentration in der Suspension bevorzugt mindestens 200 g/l, besonders bevorzugt mindestens 300 g/l und insbesondere bevorzugt mindestens 400 g/l beträgt. Ganz besonders hohe Klopfdichten werden erreicht, wenn die Feststoffkonzentration in der Suspension mindestens 500 g/l beträgt.

Um bei sphärischen Materialien hohe Klopfdichten zu erzielen, müssen bestimmte Produkteigenschaften optimiert werden. Zunächst einmal müssen die einzelnen Teilchen möglichst kompakt aufgebaut sein, d.h. sie dürfen keine zu hohen Porositäten aufweisen. Dies allein ist jedoch noch nicht hinreichend für eine hohe Klopfdichte, denn diese hängt außerdem von der erreichbaren Packungsdichte ab. Die durch Klopfen erreichbare Packungsdichte schließlich hängt auch noch von der Oberflächenrauhigkeit, der Teilchengrößenverteilung und der Sphäroidizität der Teilchen ab.

Die bevorzugten pulverförmigen Verbindungen zeichnen sich bei hohen Klopfdichten durch niedrige D50-Werte der Teilchengrößenverteilung aus.

Es gibt nun eine ganze Reihe von Verfahrensparametern, mit denen sich die mittlere Teilchengröße einstellen lässt. Sehr wichtig ist beispielsweise die Übersättigung der Mutterlauge mit den entsprechenden Metallionen. Im Falle der erfindungsgemäßen Nickelmischmetallhydroxide hängt diese von der Hydroxidionenkonzentration und der Konzentration des Komplexbildners Ammoniak in der Mutterlauge ab. Bei hohen Alkalikonzentrationen und niedrigen Ammoniakkonzentrationen in der Mutterlauge ist die Löslichkeit der betreffenden Metalle sehr niedrig, die Übersättigung entsprechend sehr hoch und die primäre homogene Keimbildung sehr ausgeprägt. In diesem Fall wachsen also sehr viele Teilchen heran und die erreichbare mittlere Teilchengröße bleibt relativ niedrig. Je nach Zusammensetzung der Produkte ergeben sich komplizierte Abhängigkeiten von der Temperatur, Hydroxidionenkonzentration und Komplexbildnerkonzentration.

Eine wichtige Rolle für die Fällung der Nickelmischmetallhydroxide gemäß der Erfindung spielt des Weiteren die Rührerdrehzahl, welche sich für eine ausreichende Vermischung verantwortlich zeigt.

Arbeitet man bei den eben beschriebenen hohen Übersättigungen, so ist in den Verfahren gemäß Stand der Technik mit Feststoffkonzentrationen von typischerweise 100 g/l kein stark ausgeprägter Einfluss der Rührerdrehzahl zu verzeichnen. Geht man zu sehr kleinen Übersättigungen, wo das möglich ist weil keine Nebenbedingungen bezüglich des mikrokristallinen Aufbaus, wie beispielsweise die Forderung nach kleinen Kristallitgrößen, dies verhindern, dann steigt der mittlere Teilchendurchmesser stark an, da die primäre homogene Keimbildung weitaus geringer ist. Unter diesen Bedingungen zeigt sich dann ein starker Einfluß der Rührerdrehzahl.

Bei der Herstellung bevorzugter manganhaltiger pulverförmiger Verbindungen gemäß der vorliegenden Erfindung, wurde gefunden, dass die optimale Konzentration der Hydroxidionen kleiner 1g/l beträgt. Dies liegt an der hohen Übersättigung der Mangan(II)ionen, da deren Löslichkeit aufgrund geringerer Komplexbildung mit Ammoniak gegenüber Nickel und Cobalt deutlich niedriger ist. Führt man die Synthese von manganhaltigen Mischmetallhydroxiden gemäß der Erfindung bei Konzentrationen von 0.1 bis 0.2 g/l NaOH; 6 bis 12 g/l $NH_3$, bei einer Temperatur von 40 bis 60° C, mittlerer, für gute Homogenisierung ausreichender Rührergeschwindigkeit und üblicher Feststoffkonzentrationen von 80 bis 120g/l gemäß dem Stand der Technik aus, erhält man zwar sphärische Teilchen mit hohem Formfaktor (Figur 7, Vergleichsbeispiel 1), die erforderliche Klopfdichte von $\geq 2g/cm^3$ wird jedoch nicht erreicht, wie aus Tabelle 2 zu ersehen ist.

Die erfindungsgemäßen Nickelmischmetallhydroxide können bevorzugt in der in Figur 1 dargestellten Anlage hergestellt werden. Nachstehend wird das erfindungsgemäße Verfahren anhand der Figur 1 etwas näher erläutert.

Ein Reaktor (1), ausgestattet mit Rührer (2), Thermostat (3) und Umlaufpumpe (4) wird zunächst mit Mutterlauge gefüllt, welche bereits die Salzkonzentration, NaOH-Konzentration und $NH_3$-Konzentration des späteren stationären Zustands aufweist. Nach Inbetriebnahme von Rührer, Begleitheizung und Umlaufpumpe werden über die Dosierpumpen (5), (6), (7) und (8) Metallsulfatlösung, Natronlauge, Ammoniak und Wasser zugeführt. Die entstehende Produktsuspension wird füllstandsgeregelt über die Pumpe (9) dem Reaktor entnommen. Der Reaktor ist weiterhin mit einem Tauchrohr (10) ausgestattet, welches am Ende einer konischen Aufweitung eine Filterplatte (11) besitzt. Mit der Pumpe (12) kann über dieses Filterelement Mutterlauge aus dem Reaktor entnommen werden. Hierdurch kann der Feststoffgehalt der Produktsuspension unabhängig von den Eduktkonzentrationen und der Salzkonzentration in der Mutterlauge eingestellt werden. Insbesondere können hierdurch sehr hohe Feststoffkonzentrationen erzielt werden, die ein Vielfaches der stöchiometrischen Konzentration betragen. Anstelle des Tauchrohres mit Filterelement kann die Mutterlauge über Hydrozyklone oder eine Querstromfiltration aus dem Reaktor abgetrennt werden. Durch die Option der Wasserzugabe über die Pumpe (8) ist weiterhin auch eine vollständige Entkopplung der Verfahrensparameter Feststoffkonzentration und Neutralsalzkonzentration möglich.

Das Material wird jeweils im stationären Zustand nach 6 bis 7 Verweilzeiten über einen Zeitraum von 24 Stunden gesammelt, auf einer Filternutsche filtriert und mit 5 Liter Wasser pro kg gewaschen. Anschließend wird das Material im Trockenschrank bei Temperaturen bis zu 90°C getrocknet. Die Nickelmischmetallhydroxide gemäß der Erfindung werden bei Temperaturen von 30°C bis 95°C, vorzugsweise bei 40 bis 60°C hergestellt. Zur Erzielung einer homogen durchmischten Reaktionszone im Reaktor können alle gängigen Rührertypen verwendet werden. Besonders gute Ergebnisse werden mit Propellerrührern oder Scheibenrührern erzielt. Aus Vergleichsbeispiel 1, (Tabelle 2, Figur 7) ist zu sehen, dass bei geringem spezifischen Energieeintrag von 19 Wh/l (Watt-Stunden pro Liter erzeugter Suspension), sowie einem Leistungseintrag in den Rührbehälter von 0.94 W/l (Watt pro Liter) und einer Feststoffkonzentration von 88 g/l zwar hohe D50-Werte der Teilchengrößenverteilung von 16.1 $\mu$m erreicht werden, die Klopfdichte von 1.6 g/cm$^3$ jedoch zu gering ist.

Der spezifische Leistungseintrag in den Reaktor wird definiert als die durch den Rührer auf die Suspension übertragene Energie pro Zeit- und Volumeneinheit. Der spezifische Energieeintrag wird definiert als die vom Rührer auf die Volumeneinheit der Suspension übertragene Energie.

Die Breite der Teilchengrößenverteilung liegt mit 1.36 im üblichen Bereich, die spezifische Oberfläche ist mit 14.2 m$^2$/g vergleichsweise hoch, wie aus Figur 7 ersichtlich ist.

Ausgehend von diesem Startpunkt wurde dann in Vergleichsbeispiel 2 die Rührerdrehzahl von 600 UpM auf 1100 UpM gesteigert und entsprechend der spezifische Energieeintrag auf 62 Wh/l erzeugter Suspension erhöht. Der Leistungseintrag in den Rührbehälter wurde auf 3.11 W/l erhöht. Es zeigte sich zwar ein deutlicher Effekt durch Rückgang des D50-Wertes auf 12.1 μm, die Klopfdichte betrug dabei 1.8 g/cm$^3$. In Vergleichsbeispiel 3 wurde schließlich das erfindungsgemäße Verfahren genutzt, um den Feststoffgehalt auf 150g/l zu erhöhen. Die Rührerdrehzahl wurde auf 600 UpM eingestellt, so dass sich ein spezifischer Energieeintrag von 19 Wh/l erzeugter Suspension und ein Leistungseintrag in den Reaktor von 0.97 W/l ergab, genauso wie im ersten Vergleichsbeispiel. Der Tabelle 2 kann man entnehmen, dass hier das Ergebnis ähnlich ist wie im zweiten Vergleichsbeispiel. Die Klopfdichte beträgt 1.9 g/cm$^3$. Erst durch die Kombination des hohen spezifischen Energieeintrags pro Liter erzeugter Suspension und hoher Feststoffkonzentration konnten die Eigenschaften der pulverförmigen Verbindungen gemäß der Erfindung erreicht werden.

Der spezifische Energieeintrag mit der Dimension Energie (Wh) pro Liter erzeugter Suspension hängt neben der Rührerleistung von dem pro Zeiteinheit gebildeten Suspensionsvolumen, und damit indirekt von der Verweilzeit ab. Daher sind lange Verweilzeiten zunächst grundsätzlich vorteilhaft. Andererseits muss im technischen Prozess aus wirtschaftlichen Gründen mit möglichst hohen Raum-Zeit-Ausbeuten, d. h. mit möglichst kurzen Verweilzeiten gearbeitet werden. Bei langen Verweilzeiten besteht grundsätzlich die Gefahr einer Vergröberung zumindest der Primärkristallite, aber auch der Agglomerate durch die Umkristallisation bzw. Oswald-Reifung. Bei sehr kurzen Verweilzeiten wird die Porosität nicht auf das minimal mögliche Maß verringert, was einen direkten unerwünschten Effekt auf die Klopfdichte hat. Die Klopfdichte kann am besten in den bevorzugten und besonders bevorzugten Verweilzeitbereichen maximiert werden. Die Verweilzeit kann 2 bis 30 Stunden betragen, vorzugsweise 4 bis 25 Stunden, besonders bevorzugt 6 bis 20 h und insbesondere bevorzugt 6 bis 15 Stunden.

In den Beispielen 1 und 2 gemäß der Erfindung wurde mit spezifischen Energieeinträgen von 65 bzw. 68 Wh/l Suspension gearbeitet und der Feststoffgehalt der Suspension betrug dabei 150g/l bzw. 250g/l. Überraschenderweise sind nicht nur die D50-Werte der Teilchengrößenverteilung auf <10 μm gesunken, sondern die Teilchengrößenverteilung ist enger geworden. Sie beträgt 0.92 bzw. 0.94 in den Beispielen 1 und 2. Diese enge Teilchengrößenverteilung führt zu einer hohen Packungsdichte der Partikel mit besonders hohen Klopfdichten von mindestens 2.2 bis 2.4 g/cm$^3$, Figuren 5 und 6.

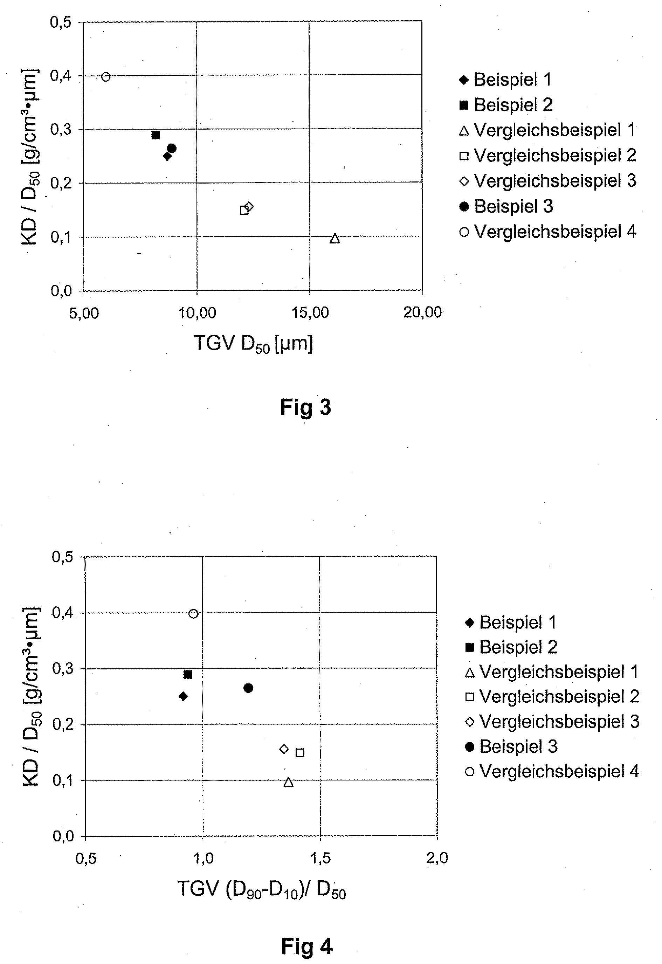

Die insbesondere für Hybrid- und Elektrofahrzeuge sowie für power-tools wichtige Schnellladung und Schnellentladung kommt in dem Verhältnis Klopfdichte zu D50-Wert zum Ausdruck. Diese Kennzahl beträgt in den erfindungsgemäßen Produkten mindestens 0.2 g/cm$^3$ ·μm, Figuren 3 und 4. Die Figuren 3 und 4 zeigen die charakteristischen Merkmale der pulverförmigen Verbindungen gemäß vorliegender Erfindung im Vergleich zu den Pulvern gemäß Stand der Technik.

Die pulverförmigen Verbindungen gemäß der Erfindung eignen sich als Vorstoffe zur Herstellung von Sekundärbatterien. Insbesondere werden die pulverförmigen Verbindungen in Lithium-Ionenzellen bzw. Lithium-Polymerzellen verwendet. Die Sekundärbatterien, die die erfindungsgemäßen Pulver enthalten, eignen sich besonders für den Einsatz in den Hybrid-, Elektrofahrzeugen, Solarmobilen sowie in den mit Brennstoffzellen betrieben Fahrzeugen.

Die Erfindung wird weiterhin durch folgende Beispiele und Vergleichsbeispiele erläutert.

Beispiele

Alle Beispiele und Vergleichsbeispiele sind in dem Reaktor, gemäß Figur 1 durchgeführt worden. Im Folgenden wird eine allgemeine Beschreibung zur Durchführung der Beispiele angegeben.

Allgemeine Beschreibung.

Der Reaktor (1) wird zunächst mit Mutterlauge gefüllt, welche die Na$_2$SO$_4$ -; NAOH-, sowie NH$_3$-Konzentration des jeweiligen stationären Reaktorzustandes aufweist. Dann werden Rührer (2); Thermostatheizung (3) und Umlaufpumpe (4) in Betrieb genommen. Nachdem die jeweilige Reaktionstemperatur erreicht ist, werden die gravimetrisch geregelten Pumpen (5) bis (8) in Betrieb genommen. Pumpe (5) fördert Metallsalzlösung, Pumpe (6) Natronlauge, Pumpe (7) Ammoniaklösung und Pumpe (8) voll entsalztes (VE) Wasser in den Reaktor. Anschließend wird Pumpe (9) gestartet, welche die entstehende Produktsuspension kontinuierlich, füllstandsgeregelt aus dem Reaktor befördert. Dann wird die gravimetrisch geregelte, selbstansaugende Pumpe (12) in Betrieb genommen, die über ein Tauchrohr (10), in dessen oberem Teil eine Filterplatte (11) angeordnet ist, um die erforderliche Menge Mutterlauge aus dem Reaktorsystem zu entnehmen und den jeweils gewünschten Feststoffgehalt der Suspension einzustellen.

Beispiel 1

Der Reaktor (1) wurde mit Mutterlauge, enthaltend 140 g/l $Na_2SO_4$, 0.1g/l NaOH und 10g/l $NH_3$ befüllt und der Rührer (2) mit 1100 UpM sowie die Umlaufpumpe (4) mit 10m$^3$/h wurden in Betrieb genommen. Anschließend wurde mit der Thermostatheizung auf 50°C aufgeheizt. Nach Erreichung der Solltemperatur wurden, gravimetrisch geregelt, mit Pumpe (5) 11132 g/h Metallsulfatlösung (34.02 g/l Ni, 34.16 g/l Co, 31.85g/l Mn), mit Pumpe (6) 7384 g/h Natronlauge (200 g/l NaOH) und mit Pumpe (7) 642 g/h Ammoniaklösung (225 g/l $NH_3$) in den Reaktor gefördert. Mit der Pumpe (12) wurden über das Tauchrohr (10) mit Filterelement (11) 7384 g/h Mutterlauge aus dem Reaktor entnommen. Die Pumpe (9) förderte füllstandsgeregelt 11592 g/h Suspension aus dem Reaktor. Nach 120 Stunden hatte der Reaktor seinen stationären Zustand erreicht und die ab diesem Zeitpunkt aus dem Reaktor herausgeförderte Suspension wurde über einen Zeitraum von 24 h in einem Vorratsgefäß gesammelt, anschließend auf eine Filternutsche abgelassen und filtriert. Der Filterkuchen wurde mit 170 Liter VE-Wasser gewaschen und anschließend in einem Trockenschrank auf Hordenblechen bei 85°C über 24 h getrocknet. Es wurden 34.3 kg trockenes Produkt mit folgenden Eigenschaften erhalten:

21.4% Ni, 21.5% Co, 20.1% Mn
Teilchengrößenverteilung ($D_{10}$:5.0$\mu$m, $D_{50}$: 8.7$\mu$m, $D_{90}$: 13.0 $\mu$m), ($D_{90}$-$D_{10}$)/$D_{50}$: 0,92
Klopfdichte (KD): 2.17g/cm$^3$
KD/$D_{50}$: 0.249 g/cm$^3 \bullet \mu$m
BET: 7.8m$^2$/g

Vergleichsbeispiel 1

Der Reaktor (1) wurde mit Mutterlauge, enthaltend 140 g/l $Na_2SO_4$, 0.1 g/l NaOH und 10 g/l $NH_3$ befüllt und der Rührer (2) mit 600 UpM sowie die Umlaufpumpe (4) mit 10m$^3$/h wurden in Betrieb genommen. Anschließend wurde mit der Thermostatheizung auf 50°C aufgeheizt. Nachdem die Solltemperatur erreicht war, wurden gravimetrisch geregelt mit Pumpe (5) 6494 g/h Metallsulfatlösung (34.02 g/l Ni, 34.16 g/l Co, 31.85 g/l Mn), mit Pumpe (6) 4307 g/h Natronlauge (200 g/l NaOH) und mit Pumpe (7) 374 g/h Ammoniaklösung (225 g/l $NH_3$) in den Reaktor gefördert. Im Gegensatz zu Beispiel1 wurde keine Mutterlauge mit der Pumpe (12) aus dem Reaktor entnommen. Die Pumpe (9) förderte füllstandsgeregelt 11175 g/h Suspension aus dem Reaktor. Nach 120 Stunden hatte der Reaktor seinen stationären Zustand erreicht und die ab diesem Zeitpunkt aus dem Reaktor herausgeförderte Suspension wurde über einen Zeitraum von 24 h in einem Vorratsgefäß gesammelt, anschließend auf eine Filternutsche abgelassen und filtriert. Der Filterkuchen wurde mit 100 Liter VE-Wasser gewaschen und anschließend in einem Trockenschrank auf Hordenblechen bei 85°C über 24 Stunden getrocknet. Es wurde 20.0 kg trockenes Produkt mit folgenden Eigenschaften erhalten:

21.2% Ni, 21.5% Co, 20.1% Mn
Teilchengrößenverteilung ($D_{10}$:8.6$\mu$m, $D_{50}$: 16.1$\mu$m, $D_{90}$: 30.6 $\mu$m), ($D_{90}$-$D_{10}$)/$D_{50}$: 1.36
Klopfdichte KD: 1.56g/cm$^3$
KD/$D_{50}$: 0.097 g/cm$^3 \cdot \mu$m
BET: 14.2m$^2$/g

In der folgenden Tabelle 2 sind die Reaktorparameter und die Eigenschaften der erhaltenen Produkte aus Beispiel 1 und Vergleichsbeispiel 1 sowie der weiteren Beispiele und Vergleichsbeispiele zusammenfassend dargestellt.

Tabelle 2

| Bezugszeichen | | Beispiel 1 | Beispiel 2 | Vergleichsbeispiel 1 | Vergleichsbeispiel 2 | Vergleichsbeispiel 3 | Beispiel 3 | Beispiel 4 |
|---|---|---|---|---|---|---|---|---|
| 1 | Reaktorvolumen $V_R$ [L]: | 190 | 190 | 190 | 190 | 190 | 190 | 190 |
| 2 | Rührerdrehzahl [upm]: | 1100 | 1100 | 600 | 1100 | 600 | 1100 | 1100 |
| | Rührerleistung P [kW]: | 0,61 | 0,65 | 0,18 | 0,59 | 0,19 | 0,65 | 0,74 |
| | $P/V_R$ [W/L]: | 3,23 | 3,41 | 0,94 | 3,11 | 0,97 | 3,41 | 3,88 |
| | P/ Fluß$_{Susp}$ [Wh/L]: | 65 | 68 | 19 | 62 | 19 | 68 | 78 |
| 3 | T [°C]: | 50 | 50 | 50 | 50 | 50 | 40 | 40 |
| 4 | Umlauf [m³/h]: | 10 | 10 | 10 | 10 | 10 | 10 | 10 |
| 5 | Metallsalzlösung [g/h]: | 11132 | 18553 | 6494 | 6494 | 11132 | 18675 | 37349 |
| | Ni [g/L]: | 34,02 | 34,02 | 34,02 | 34,02 | 34,02 | 70,25 | 70,25 |
| | Co [g/L]: | 34,16 | 34,16 | 34,16 | 34,16 | 34,16 | 20,16 | 20,16 |
| | Mn [g/L]: | 31,85 | 31,85 | 31,85 | 31,85 | 31,85 | 0,00 | 0,00 |
| | Fe [g/L]: | 0,00 | 0,00 | 0,00 | 0,00 | 0,00 | 9,55 | 9,55 |
| 6 | Natronlauge [g/h]: | 7384 | 12306 | 4307 | 4307 | 7384 | 12198 | 24395 |
| | NaOH [g/L]: | 200 | 200 | 200 | 200 | 200 | 200 | 200 |
| 7 | Ammoniak [g/h]: | 642 | 1069 | 374 | 374 | 642 | 850 | 1700 |
| | $NH_3$ [g/L]: | 225 | 225 | 225 | 225 | 225 | 225 | 225 |
| 8 | VE-Wasser [g/h]: | 0 | 0 | 0 | 0 | 0 | 0 | 1 |
| 12 | Mutterlauge [g/h]: | 7564 | 19668 | 0 | 0 | 7565 | 19465 | 49519 |
| | NaOH [g/L]: | 0,1 | 0,1 | 0,1 | 0,1 | 0,1 | 0,2 | 0,2 |
| | $NH_3$ [g/L]: | 10 | 10 | 10 | 10 | 10 | 8 | 8 |
| 9 | Fluß Suspension [g/h]: | 11592 | 12260 | 11175 | 11175 | 11592 | 12257 | 13926 |
| | Feststoff [g/L]: | 150 | 250 | 88 | 88 | 150 | 250 | 500 |
| | Verweilzeit [h]: | 20 | 20 | 20 | 20 | 20 | 20 | 20 |
| | Produktmenge [kg]: | 34,3 | 57,2 | 20,0 | 20,0 | 34,3 | 57,1 | 114,1 |
| | Restfeuchte [%]: | 0,2 | 0,28 | 0,13 | 0,19 | 0,16 | 0,21 | 0,13 |
| | Ni [%]: | 21,3 | 21,3 | 21,4 | 21,3 | 21,3 | 44,5 | 44,3 |
| | Co [%]: | 21,3 | 21,5 | 21,2 | 21,2 | 21,2 | 12,9 | 12,8 |
| | Mn [%]: | 20,1 | 19,9 | 20,0 | 20,2 | 19,8 | | |
| | Fe [%]: | | | | | | 6,2 | 6,1 |
| | $D_{10}$ [µm]: | 5,0 | 4,6 | 8,6 | 5,7 | 7,7 | 4,5 | 3,2 |

EP 2 190 786 B1

| Bezugszeichen | | Beispiel 1 | Beispiel 2 | Vergleichsbeispiel 1 | Vergleichsbeispiel 2 | Vergleichsbeispiel 3 | Beispiel 3 | Beispiel 4 |
|---|---|---|---|---|---|---|---|---|
| | $0_{50}$ [μm]: | 8,7 | 8,2 | 16,1 | 12,1 | 12,3 | 8,9 | 5,8 |
| | $0_{90}$ [μm]: | 13,0 | 12,3 | 30,6 | 22,8 | 24,3 | 15,1 | 9,0 |
| | $(D_{90}\text{-}D_{10})/D_{50}$: | 0,92 | 0,94 | 1,36 | 1,41 | 1,35 | 1,19 | 1,01 |
| | KD [g/cm$^3$]: | 2,17 | 2,37 | 1,56 | 1,80 | 1,91 | 2,35 | 2,41 |
| | KD/$D_{50}$ [g/cm$^3$•μm]: | 0,249 | 0,289 | 0,097 | 0,149 | 0,155 | 0,264 | 0,416 |
| | BET [m$^2$/g]: | 7,8 | 6,9 | 14,2 | 9,8 | 9,2 | 8,9 | 10,0 |

**Patentansprüche**

1. Pulverförmige Verbindung der Formel $Ni_aM1_bM2_cO_x(OH)_y$, wobei M1 mindestens ein. Element ausgewählt aus der Gruppe bestehend aus Fe, Co, Zn, Cu und/oder deren Mischungen, M2 mindestens ein Element ausgewählt aus der Gruppe Mn, Al, Cr, B, Mg, Ca, Sr, Ba, Si und/oder deren Mischungen bedeuten, $0.3 \leq a \leq 0.83$, $0.1 \leq b \leq 0.5$, $0.01 \leq c \leq 0.5$, $0.01 \leq x \leq 0,99$ und $1.01 \leq y \leq 1.99$ sind, **dadurch gekennzeichnet , dass** das Verhältnis von Klopfdichte, gemessen nach ASTM B 527 zu D50-Wert der Teilchengrößenverteilung, gemessen nach ASTM B 822 mindestens $0{,}2$ g/cm$^3 \cdot \mu$m beträgt, wobei die pulverförmige Verbindung eine BET - Oberfläche, gemessen nach ASTM D 3663 kleiner 9 m$^2$/g aufweist.

2. Pulverförmige Verbindungen gemäß Anspruch 1, **dadurch gekennzeichnet, dass** das Verhältnis der Klopfdichte zu D50- Wert der Teilchengrößenverteilung mindestens 0.4 g/cm$^3$ $\mu$m beträgt.

3. Pulverförmige Verbindungen gemäß Anspruch 1, **dadurch gekennzeichnet, dass** das Verhältnis der Klopfdichte zu D50- Wert der Teilchengrößenverteilung mindestens 0.5 g/cm$^3 \cdot \mu$m beträgt.

4. Pulverförmige Verbindung gemäß mindestens einem der Ansprüche 1 bis 3, **dadurch gekennzeichnet, dass** die BET - Oberfläche, gemessen nach ASM D 3663 kleiner 7 m$^2$/g ist.

5. Pulverförmige Verbindung gemäß mindestens einem der Ansprüche 1 bis 4 , **dadurch gekennzeichnet, dass** die normierte Breite der Korngrößenverteilung, definiert nach der Formel (1) $\leq 1.3$ ist

$$\frac{D90-D10}{D50},$$

worin D Durchmesser der Pulverpartikel bedeutet.

6. Pulverförmige Verbindung gemäß mindestens einem der Ansprüche 1 bis 4, **dadurch gekennzeichnet, dass** die normierte Breite der Korngrößenverteilung, definiert nach der Formel (1) $\leq 1.0$ ist

$$\frac{D90-D10}{D50},$$

worin D Durchmesser der Pulverpartikel bedeutet.

7. Pulverförmige Verbindung gemäß mindestens einem der Ansprüche 1 bis 6, **dadurch gekennzeichnet, dass** die Partikel sphäroidische Form aufweisen.

8. Pulverförmige Verbindung gemäß mindestens einem der Ansprüche 1 bis 7, **dadurch gekennzeichnet, dass** die Partikel einen Formfaktor von $\geq 0.8$ aufweisen.

9. Pulverförmige Verbindung gemäß mindestens einem der Ansprüche 1 bis 7, **dadurch gekennzeichnet, dass** die Partikel einen Formfaktor von $\geq 0.9$ aufweisen.

10. Verfahren zur Herstellung der pulverförmigen Verbindung gemäß wenigstens einem der Ansprüche 1 bis 9 bestehend aus folgenden Schritten:

   a) Bereitstellen von mindestens einer ersten und einer zweiten Eduktlösung,
   b) Zusammenführen von mindestens der ersten und der zweiten Eduktlösung in einem Reaktor und Erzeugung einer homogen durchmischen Reaktionszone mit einem spezifischen mechanischen Leistungseintrag von mindestens 2 Watt/Liter und Erzeugung einer Produktsuspension, bestehend aus unlöslichem Produkt und einer, durch Einstellung eines Laugenüberschusses übersättigten Mutterlauge, mit einem pH-Wert von 10-12.
   c) Partielle Abtrennung der Mutterlauge vom ausgefällten Produkt zur Einstellung von Feststoffgehalten von mindestens 150 g/l in der Suspension durch Klär-, oder Filterelemente,

11. Verfahren nach Anspruch 10, **dadurch gekennzeichnet, dass** der Feststoffgehalt in der Suspension mindestens 300 g/l beträgt.

12. Verfahren nach Anspruch 10, **dadurch gekennzeichnet, dass** der Feststoffgehalt in der Suspension mindestens 500 g/l beträgt.

13. Verfahren nach einem der Ansprüche 10 bis 12 **dadurch gekennzeichnet, dass** der spezifische mechanische Leistungseintrag mindestens 4 W/l beträgt.

14. Verwendung der pulverförmigen Verbindung gemäß mindestens eines der Ansprüche 1 bis 9als Vorstoff zur Herstellung von Lithiumverbindungen für Lithium-Sekundärbatterien.

15. Verwendung der pulverförmigen Verbindung gemäß mindestens eines der Ansprüche 1 bis 9 als Vorstoff zur Herstellung von Lithiumverbindungen für Lithium-Sekundärbatterien zum Einsatz für Hybrid- und Elektrofahrzeuge, Solarmobile sowie in den mit Brennstoffzellen betriebenen Fahrzeugen.


**Claims**

1. Pulverulent compound of the formula $Ni_aMl_bM2_cO_x(OH)_y$ where M1 is at least one element selected from the group consisting of Fe, Co, Zn, Cu and mixtures thereof, M2 is at least one element selected from the group consisting of Mn, Al, Cr, B, Mg, Ca, Sr, Ba, Si and mixtures thereof, $0.3 \leq a \leq 0.83$, $0.1 \leq b \leq 0.5$, $0.01 \leq c \leq 0.5$, $0.01 \leq x \leq 0.99$ and $1.01 \leq y \leq 1.99$, **characterized in that** the ratio of tapped density measured in accordance with ASTM B 527 to the D50 of the particle size distribution measured in accordance with ASTM B 822 is at least $0.2$ g/cm$^3 \cdot \mu$m, where the pulverulent compound has a BET surface area measured in accordance with ASTM D 3663 is less than 9 m$^2$/g.

2. Pulverulent compound according to Claim 1, **characterized in that** the ratio of the tapped density to the D50 of the particle size distribution is at least $0.4$ g/cm$^3 \cdot \mu$m.

3. Pulverulent compound according to claim 1, **characterized in that** the ratio of the tapped density to the D50 of the particle size distribution is at least $0.5$ g/cm$^3 \cdot \mu$m.

4. Pulverulent compound according to at least one of Claims 1 to 3, **characterized in that** the BET surface area measured in accordance with ASTM D 3663 is less than 7 m$^2$/g.

5. Pulverulent compound according to at least one of Claims 1 to 4, **characterized in that** the normalized width of the particle size distribution defined by the formula (1)

$$\frac{D90 - D10}{D50},$$

where D is the diameter of the powder particles, is $\leq 1.3$.

6. Pulverulent compound according to at least one of Claims 1 to 4, **characterized in that** the normalized width of the particle size distribution defined by the formula (1)

$$\frac{D90 - D10}{D50},$$

where D is the diameter of the powder particles, is $\leq 1.0$.

7. Pulverulent compound according to at least one of Claims 1 to 6, **characterized in that** the particles have a spheroidal shape.

8. Pulverulent compound according to at least one of Claims 1 to 7, **characterized in that** the particles have a shape factor of $\leq 0.8$.

9. Pulverulent compound according to at least one of Claims 1 to 7, **characterized in that** the particles have a shape factor of $\geq 0.9$.

10. Process for preparing the pulverulent compound according to at least one of Claims 1 to 9, which comprises the following steps:

   a) provision of at least a first starting solution and a second starting solution,
   b) combining of at least the first starting solution and the second starting solution in a reactor and production of a homogeneously mixed reaction zone having a specific mechanical power input of at least 2 watt/liter and production of a product suspension comprising insoluble product and a mother liquor which is supersaturated by setting of an excess of alkali and has a pH of 10-12,
   c) partial separation of the mother liquor from the precipitated product to set solids contents of at least 150 g/l in the suspension by means of clarification or filtration elements.

11. Process according to Claim 10, **characterized in that** the solids content in the suspension is at least 300 g/l.

12. Process according to Claim 10, **characterized in that** the solids content in the suspension is at least 500 g/l.

13. Process according to one of Claims 10 to 12, **characterized in that** the specific mechanical power input is at least 4 W/l.

14. Use of the pulverulent compound according to at least one of Claims 1 to 9 as intermediate for producing lithium compounds for secondary lithium batteries.

15. Use of the pulverulent compound according to at least one of Claims 1 to 9 as intermediate for producing lithium compounds for secondary lithium batteries for use in hybrid vehicles and electric vehicles, solar mobiles and in vehicles powered by fuel cells.


**Revendications**

1. Composé sous forme de poudre de formule $Ni_aM1_bM2_cO_x(OH)_y$ dans laquelle M1 signifie au moins un élément du groupe constitué par Fe, Co, Zn, Cu et/ou leurs mélanges, M2 signifie au moins un élément choisi dans le groupe Mn, Al, Cr, B, Mg, Ca, Sr, Ba, Si et/ou leurs mélanges, $0,3 \leq a \leq 0,83$, $0,1 \leq b \leq 0,5$, $0,01 \leq c \leq 0,5$, $0,01 \leq x \leq 0,99$ et $1,01 \leq y \leq 1,99$, **caractérisé en ce que** le rapport de la densité tassée, mesurée selon la norme ASTM B 527, à la valeur D50 de la répartition granulométrique, mesurée selon la norme ASTM B 822, vaut au moins 0,2 g/cm$^{3*}\mu$m, le composé sous forme de poudre présentant une surface BET, mesurée selon la norme ASTM D 3663, inférieure à 9 m$^2$/g.

2. Composés sous forme de poudre selon la revendication 1, **caractérisés en ce que** le rapport de la densité tassée à la valeur D50 de la répartition granulométrique vaut au moins 0,4 g/cm$^{3*}\mu$m.

3. Composés sous forme de poudre selon la revendication 1, **caractérisés en ce que** le rapport de la densité tassée à la valeur D50 de la répartition granulométrique vaut au moins 0,5 g/cm$^{3*}\mu$m.

4. Composé sous forme de poudre selon au moins l'une quelconque des revendications 1 à 3, **caractérisé en ce que** la surface BET, mesurée selon la norme ASM D 3663, est inférieure à 7 m$^2$/g.

5. Composé sous forme de poudre selon au moins l'une quelconque des revendications 1 à 4, **caractérisé en ce que** la largeur normalisée de la répartition granulométrique, définie selon la formule (1) est $\leq 1,3$

$$\frac{D90-D10}{D50},$$

dans laquelle D signifie le diamètre des particules de poudre.

6. Composé sous forme de poudre selon au moins l'une quelconque des revendications 1 à 4, **caractérisé en ce que** la largeur normalisée de la répartition granulométrique, définie selon la formule (1) est $\leq 1,0$

$$\frac{D90-D10}{D50,}$$

dans laquelle D signifie le diamètre des particules de poudre.

7. Composé sous forme de poudre selon au moins l'une quelconque des revendications 1 à 6, **caractérisé en ce que** les particules présentent une forme sphéroïde.

8. Composé sous forme de poudre selon au moins l'une quelconque des revendications 1 à 7, **caractérisé en ce que** les particules présentent un facteur de forme $\geq 0,8$.

9. Composé sous forme de poudre selon au moins l'une quelconque des revendications 1 à 7, **caractérisé en ce que** les particules présentent un facteur de forme $\geq 0,9$.

10. Procédé pour la préparation du composé sous forme de poudre selon au moins l'une quelconque des revendications 1 à 9, constitué par les étapes suivantes :

   a) mise à disposition d'au moins une première et une deuxième solution de départ,
   b) réunion de ladite au moins une première et une deuxième solution de départ dans un réacteur et génération d'une zone de réaction mélangée de manière homogène par une introduction de puissance mécanique spécifique d'au moins 2 Watts/litre et génération d'une suspension de produit, constituée par un produit insoluble et une lessive-mère sursaturée par réglage d'un excès de lessive, présentant un pH de 10-12.
   c) séparation partielle de la lessive-mère du produit précipité pour le réglage de teneurs en solides d'au moins 150 g/l dans la suspension par des éléments de clarification ou de filtration.

11. Procédé selon la revendication 10, **caractérisé en ce que** la teneur en solides dans la suspension est d'au moins 300 g/l.

12. Procédé selon la revendication 10, **caractérisé en ce que** la teneur en solides dans la suspension est d'au moins 500 g/l.

13. Procédé selon l'une quelconque des revendications 10 à 12, **caractérisé en ce que** l'introduction de puissance mécanique spécifique est d'au moins 4 W/l.

14. Utilisation du composé sous forme de poudre selon au moins l'une quelconque des revendications 1 à 9 comme précurseur pour la préparation de composés à base de lithium pour des batteries secondaires à lithium.

15. Utilisation du composé sous forme de poudre selon au moins l'une quelconque des revendications 1 à 9 comme précurseur pour la préparation de composés à base de lithium pour des batteries rechargeables à lithium, pour une utilisation pour des véhicules hybrides et électriques, des voitures solaires ainsi que dans les véhicules fonctionnant avec des piles à combustible.

**Fig 1**

Legend:
- ◆ Beispiel 1
- ■ Beispiel 2
- △ Vergleichsbeispiel 1
- □ Vergleichsbeispiel 2
- ◇ Vergleichsbeispiel 3
- ● Beispiel 3
- ○ Vergleichsbeispiel 4

Axes: KD [g/cm³] vs TGV $D_{50}$ [µm]

**Fig 2**

Fig 3

Fig 4

Beispiel 1

30 µm

**Fig 5**

Beispiel 2

30 µm

**Fig 6**

Vergleichsbeispiel 1

30 µm

**Fig 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 10027611 A
- JP 11317224 A
- US 20020053663 A1
- US 20030054251 A1
- WO 2004092073 A1

- US 20030054251 A
- WO 2004032260 A
- WO 2007113102 A
- WO 2007019986 A
- US 5476530 A